# EUROPEAN PATENT APPLICATION

(11) **EP 3 093 230 A1**
(43) Date of publication of application: **16.11.2016**
(21) Application number: 15735008.3
(22) Date of filing: 09.01.2015
(51) Int. Cl.: B63H 20/00, B63B 1/38, B63H 5/20, B63H 21/20, B63H 25/42

(54) **VESSEL EQUIPPED WITH MAIN PROPELLER AND ADDITIONAL PROPELLER AND HYBRID NAVIGATION METHOD THEREFOR**

(30) Priority: 10.01.2014 JP 2014003095
(71) Applicant: Morimoto, Nobuyoshi, Tokyo 150-0035 (JP)
(72) Inventor: Morimoto, Nobuyoshi, Tokyo 150-0035 (JP)
(74) Representative: Williams Powell
(86) International application number: PCT/JP2015/050499
(87) International publication number: WO 2015/105180

(57) **Abstract**

A ship configured to obtain propelling force by driving a main propeller with a main engine is provided with an additional propeller and a driving unit therefor. The additional propeller is disposed at a ship bottom or at a rising section of the ship bottom, in a position different from the main propeller. Further, the output of the driving unit of the additional propeller is 25% or less than the output of the driving unit of the main engine, and the operating condition can be selectable between regular operating condition in which propelling force is obtained by driving the main propeller and the other operating condition in that propelling force is obtained by driving the additional propeller.

## Description

### BACKGROUND

### Technical Field

The present invention relates to a ship equipped with a main propeller and an additional propeller, and a hybrid operating method therefor.

### Related Art

In the case of a ship, for example, a commercial ship, particularly a cargo ship, fluctuations of a draft line between when cargo is loaded and when the cargo is unloaded is very large.

Generally, in the case of the cargo ship, the ship is operated with ballast draft or designed load draft. Particularly, the cargo ship is designed and constructed considering safety at the time of a bad sea state such that the draft can be kept even in the operation under heavy weather. Further, a draft depth is determined in consideration of propeller immersion to use a propulsion propeller effectively and safely.

However, to keep the draft depth deep is to increase fuel consumption caused by increase of a displacement, expansion of contact area with water of a shell, and deterioration of a waterplane area coefficient.

Actually, the cargo ship is operated with the ballast draft considering safety of the ship after unloading the cargo although there is no freight revenue. Under such a situation, reducing the fuel consumption provides significant economic effects, and further contributes to environmental improvement effects on NOx, SOx, and so on.

Especially, in recent years, ballast water treatment is regarded as a problem from the viewpoint of environmental concerns in that sea creatures are mixed inside the ballast water.

It should be noted that there are related arts disclosing the technologies in relation to a duct propeller (nozzle propeller) as next: JP Patent Nos. 3508811 and 5231878.

### SUMMARY

Therefore, a main object of the present invention is to provide a ship that can reduce fuel consumption without impairing operational safety of the ship and equipped with a main propeller and an additional propeller, as well as a hybrid (composite) operating method therefor.

The present invention that achieves the above-mentioned object is as described below.

### <Invention according to Claim 1>

A ship configured to obtain propelling force by driving a main propeller with a main engine, and provided with an additional propeller and a driving unit for the additional propeller,
wherein one or a plurality of the additional propellers is disposed at a ship bottom or at a rising section of the ship bottom, in a position different from where the main propeller is disposed, and
operating condition is selectable between regular operating condition in which propelling force is obtained by driving the main propeller and the other operating condition in which propelling force is obtained by driving the additional propeller.

### <Effect>

According to the present invention, a small additional propeller and a driving unit therefor are provided in addition to a main propeller. The output of the driving unit of the additional propeller is 35% or less, more preferably, 25% or less than the output of a driving unit of the main engine. When cargo (freight) is loaded, the ship is operated by driving the main propeller, having a state of draft close to designed load draft. If necessary, the ship is operated also with the additional propeller in a combined manner.

When the ship navigates back to a port after unloading the cargo, the ship is mainly operated by the small additional propeller. Especially in days of calm and steady sea condition, there is little necessity to secure stability of the ship too severely during navigation. Accordingly, the ship is made to travel by means of the small additional propeller, keeping a draft line further lower.

As a result, apparent displacement is decreased and contact area with water of a shell is reduced because the draft line is lowered. Furthermore, a waterplane area coefficient can be improved, and significant reducing effects of fuel consumption can be obtained.

Additionally, since the small additional propeller is driven, small output of the driving unit is enough (35% or less, more preferably, 25% or less of the output of the driving unit of the main engine). From this viewpoint, the significant reducing effects of fuel consumption can be obtained.

In the case where the ship leaves a port after fully loaded with the cargo and then settles regular navigation mode, the ship navigates with the deep draft, driving the main propeller. Further, in the case where the ship navigates using ballast after unloading the cargo, the ship is operated with the additional propeller with lower draft line according to sea condition after having sea pass navigation. However, in the case of bad weather, even when the ship is in an unload condition, the ship can travel using the small additional propeller or the main propeller in a stabilized condition under draft adjustment by filling ballast water. Further, the additional propeller and the main propeller can be used in a combined manner, if necessary.

Since the additional small duct propeller is mainly used at the time of ballast navigation, a propeller immersion ratio for the main propeller is not so largely limited so that a propeller diameter of a designed propeller can be made larger than the propeller diameter according to the relation between ship and propeller design in the related arts. This enables propeller efficiency to be upgraded, increasing the efficiency of about 5% to 7%. Thus, by adopting the designed propeller having the larger diameter, the propeller efficiency is increased, and the output required for the main engine is reduced at the same speed of the ship, thereby significantly improving fuel efficiency.

### <Invention according to Claim 2>

The ship according to claim 1, wherein the additional propeller is a duct propeller.

### <Effect>

In the case of using the duct propeller as the additional propeller, relatively large thrust can be obtained even though the propeller size is small.

### <Invention according to Claim 3>

The ship according to claim 2, wherein a position of the duct propeller is selectable between a state of being assembled at the outside of the ship and the other state of being retracted to the inside of the ship.

### <Effect>

In the case where the duct propeller is assembled at the outside of the ship and kept with unused condition under sailing, the propeller acts as resistance. Therefore, preferably the duct propeller is retracted to the inside of the ship.

### <Invention according to Claim 4>

The ship according to claim 2, wherein the duct propeller is provided at a stern area.

### <Effect>

The duct propeller can be provided at the stern area.

### <Invention according to Claim 5>

The ship according to claim 2, wherein the duct propeller is provided at a bow area.

### <Effect>

The duct propeller can be provided at the bow area.

### <Invention according to Claim 6>

The ship according to claim 2, wherein the duct propeller is provided at an intermediate area in the ship length direction.

### <Effect>

The duct propeller can be provided at the intermediate area in the ship length direction.

### <Invention according to Claim 7>

The ship according to any one of claims 2 to 6, wherein the duct propeller is rotatable around a vertical shaft line.

### <Effect>

In the case where the duct propeller is rotatable around the vertical shaft line, the duct propeller has maneuverability (directional property). As a result, the ship can improve its maneuverability by suitably rotating the duct propeller in the additional propeller navigation and combination navigation of the main propeller and the additional propeller.

### <Invention according to Claim 8>

A method for operating a ship configured to obtain propelling force by driving a main propeller with a main engine, and provided with an additional propeller and a driving unit for the additional propeller,
wherein the additional propeller is disposed at a ship bottom or at a rising section of the ship bottom, in a position different from where the main propeller is disposed, and
the ship is propelled by driving the main propeller in a load condition, and the ship is propelled by driving the additional propeller in an unload condition.

### <Effect>

The same effect as claim 1 can be obtained.

### <Invention according to Claim 9>

The method for operating a ship according to claim 8, wherein the additional propeller is a duct propeller, and the duct propeller is provided at a bow area, and the ship is propelled in a stern direction by driving the duct propeller in an unload condition.

### <Effect>

In the case of using the duct propeller as the additional propeller, relatively large thrust can be obtained even though the propeller size is small. Additionally, the duct propeller can be provided at the bow area, and when the ship is in the unload condition, the duct propeller is driven to propel the ship in the stern direction.

### <Invention according to Claim 10>

The method for operating a ship according to claim 9, wherein the duct propeller is retractable to the inside of the ship, and the ship is propelled in the stern direction by driving the duct propeller after extracting the duct propeller from the inside to the outside of the ship so as to be assembled there in an unload condition.

### <Effect>

The same effect as claim 3 can be obtained.

### <Invention according to Claim 11>

The method for operating a ship according to claim 9 or 10, wherein the main propeller is partially or entirely disposed on a draft line when the duct propeller is driven in the unload condition.

### <Effect>

Since the main propeller is partially or entirely disposed on the draft line, the apparent displacement is decreased and the contact area with the water of the shell is reduced by lowering the draft line. Further, the water plane area coefficient can be improved, and the significant reducing effects of fuel consumption can be obtained.

### <Invention according to Claim 12>

The method for operating a ship according to claim 8, wherein an air blowing section is provided on an upper portion of a duct of the additional propeller to blow out air from the air blowing section, and the ship navigates generating a flow of bubbles at the ship bottom.

### <Effect>

It is known that friction of a hull can be reduced by executing navigation, generating the flow of bubbles at the ship bottom by blowing out the air. Therefore, the friction of the hull (particularly at the ship bottom) can be reduced, and economic operation can be achieved by providing the air blowing section at the additional propeller, preferably, at the duct propeller according to the present invention.

According to the present invention, the fuel consumption can be reduced without impairing operational safety of the ship.

### BRIEF DESCRIPTION OF DRAWINGS

FIG. 1 is a schematic front view of a ship in a load condition according to the present invention;
FIG. 2 is a front view of an exemplary duct propeller;
FIG. 3 is a schematic front view of the ship according to the present invention while operating in an unload condition; and
FIG. 4 is a perspective view of another example of the duct propeller according to the present invention.

### DETAILED DESCRIPTION

An embodiment of the present invention will be described with reference to the attached drawings.

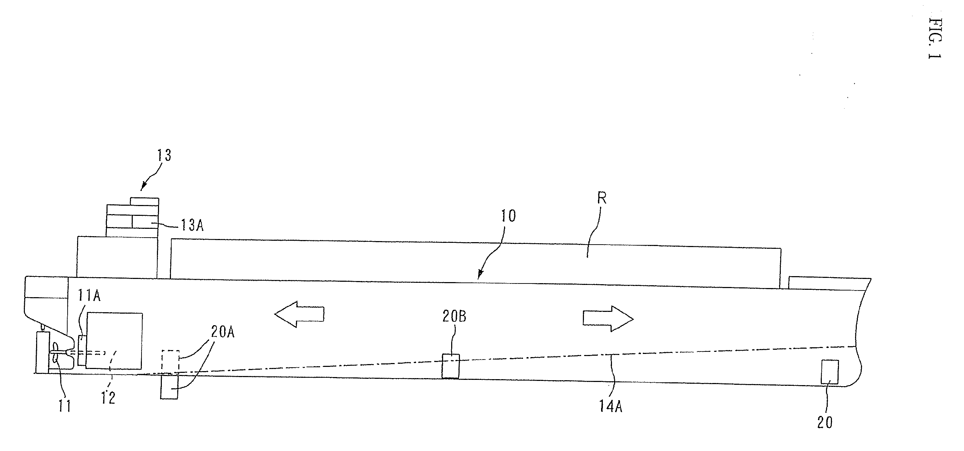

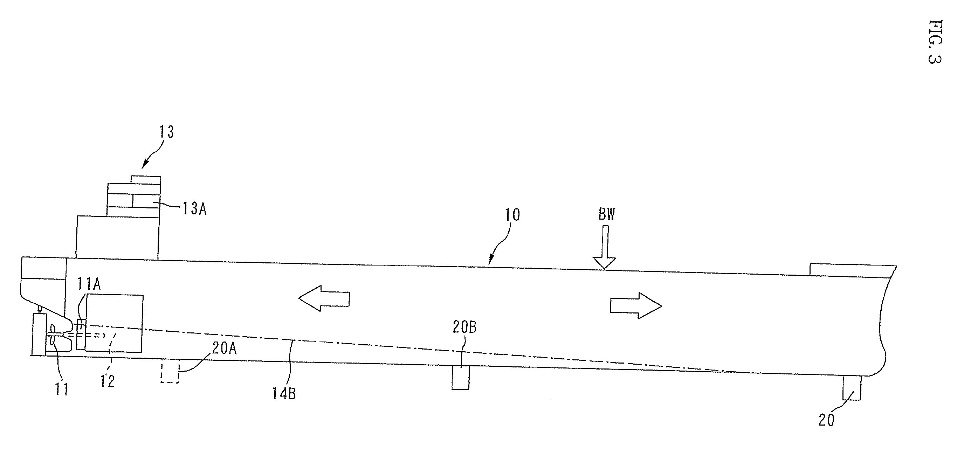

FIG. 1 is a schematic front view of a ship according to the present invention, for example, a commercial ship 10 loaded with cargo, such as a cargo ship. The commercial ship 10 obtains propelling force by driving a main propeller 11 by a main engine (propulsion engine) 12 such as a diesel engine. The reference sign 14A represents a water line in an unload condition, indicating a state of trim by head in which the water line gradually becomes higher in a bow direction and intersects with a ship bottom line in a stern direction. In FIG. 3, the reference sign 14B represents a water line, indicating a state of trim by the stern which is a reverse state of the above state.

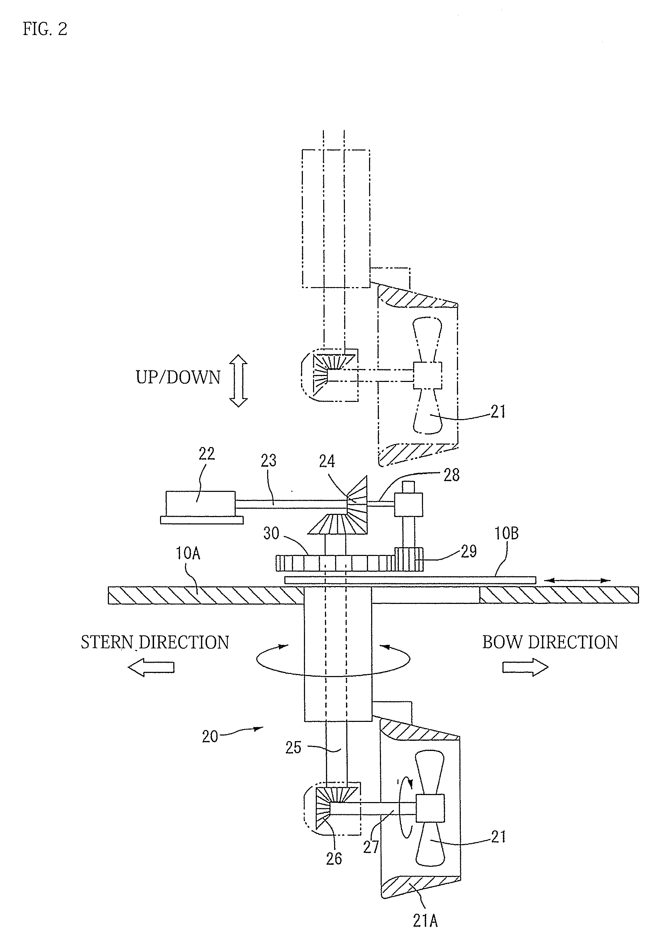

As is referenced in FIG. 2, the ship is provided with an additional propeller 20 including a driving unit 22 therefor and a duct propeller 21.

This additional propeller 20 is disposed at a position different from the main propeller 11, more specifically, in a bow area, a stern area, or an intermediate position at a ship bottom or a rising section of the ship bottom. The case of disposing the additional propeller at the stern position is indicated by the reference sign 20A, and the case of disposing the same at the intermediate position is indicated by the reference sign 20B.

Additionally, a bridge 13 is provided on the stern side, and a window 13A is formed so as to monitor not only the bow-side direction but also the stern-side direction.

The output of the driving unit 22 of the additional propeller 20 is small, which is 25% or less than the output of a driving unit of the main engine 12.

Further, operating condition is selectable between regular operating condition in which propelling force is obtained by driving the main propeller 11 and the other operating condition in which propelling force is obtained by driving the additional propeller 20.

Explaining an example of the additional propeller 20, an electric motor or a hydraulic motor may be used as the driving unit 22, and further, if necessary, may be connected with the main engine (propulsion engine) 12 so as to obtain drive power.

The duct propeller 21 that includes a duct 21A around thereof is configured to be rotated when rotational drive force of an output shaft 23 by the driving unit 22 is transmitted to a vertical shaft 25 through a pair of bevel gears 24 and then transmitted, as rotational force of a propeller drive shaft 27, through a pair of bevel gears 26 provided at the vertical shaft 25.

On the other hand, the duct propeller 21 is configured to be rotatable around the vertical shaft 25 when rotational drive force of a transmission shaft 28 by the driving unit 22 is transmitted to a driving small gear 29 and a large gear 30 engaged therewith.

Further, a device including the duct propeller 21 disposed below a ship bottom 10A is assembled at the outside of the ship bottom 10A as illustrated in FIG. 2, but preferably, the device is configured to be retractable to the inside of the ship because such assembly of the duct propeller at the outside is to be an obstacle during normal navigation. The reference sign 10B indicates a shielding member that shuts after the device is retracted to the inside of the ship.

With this configuration, when cargo R is loaded, the ship is operated by driving the main propeller 11 with the main engine 12 in a state of draft close to designed load draft as illustrated in FIG. 1.

After the cargo is unloaded, especially in a day of calm weather or in a quiet sea, the ship is operated with the small additional propeller 20, keeping the draft line low as illustrated in FIG. 3 because there is little necessity to secure stability of the ship too severely at the time of navigating the ship. In this case, as indicated by an outlined arrow in FIG. 3, a moving direction of the ship can be suitably selected, and the bow and the stern are monitored by the bridge 13 depending on the moving direction of the ship.

As a result, by lowering the draft line, apparent displacement is decreased and the contact area with the water of the shell is reduced. Further, a waterplane area coefficient can be improved and significant reducing effects of fuel consumption can be obtained.

Moreover, since the small additional propeller 20 is driven, small output from the driving unit 22 is enough, and the ship can be operated with the output of 35% or less, especially 25% or less, and best of all, about 10% to 5% of the output of the driving unit in the main engine 12. From this viewpoint, significant reducing effects of fuel consumption can be obtained. In a day of calm weather (when Beaufort scale is 0 to 3), travel speed of approximately 5 to 10 knots is enough.

In the case where the ship leaves a port after unloading the cargo R and then shifts to the regular navigation, the ship navigates by driving the additional propeller mainly or by driving main propeller 11 or in a combined manner while keeping the lower draft.

Further, in the case of bad weather, ballast water BW (reserve space for the ballast water is not illustrated) is filled even in an unload condition. This enables the ship to travel in a stabilized state by means of the small additional propeller 20 or the main propeller 11.

When the duct propeller 21 is rotatable around a vertical shaft line, propelling in the stern direction can be achieved by driving the duct propeller 21 as illustrated in FIG. 3 in a required operating condition.

In the case where the duct propeller 21 is rotatable around the vertical shaft 25 (vertical shaft line), when the additional propeller and the main propeller are operated in a combined manner, a steering system can be additionally provided by suitably rotating the additional propeller around the vertical shaft line, and maneuverability (directional property) can be improved. Further, when the ship is docked at a port, the duct propeller is oriented sideways so as to be utilized as a slide thruster.

Further, a propeller idling prevention device 11A for preventing the main propeller 11 from rotating may be provided.

If necessary, the duct propeller 21 may be provided on the right and left sides by setting a center line of the ship as a boundary. The duct propellers 21, 21 on the right and left sides rotate around the vertical shaft line, thereby improving the maneuverability. Further, when the propeller is utilized as the slide thruster, the ship can be more easily docked at the port.

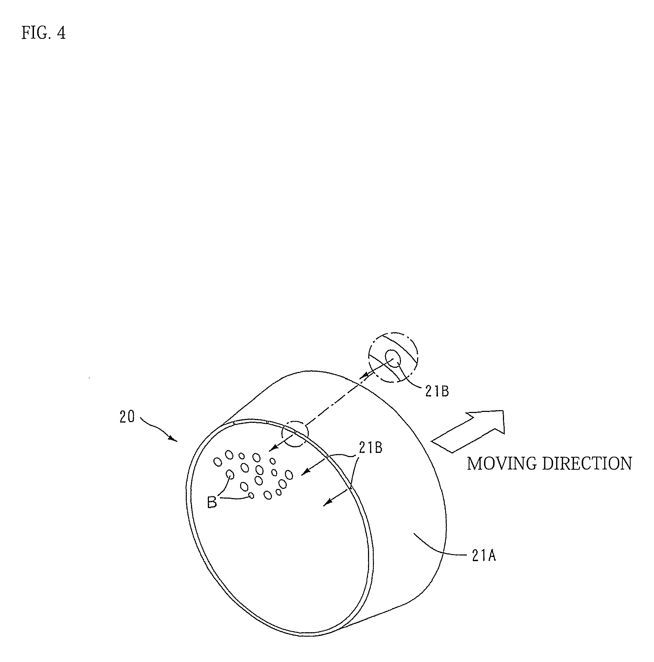

On the other hand, the additional propeller 20 preferably includes an air blowing section 21B formed at the duct 21A of the duct propeller 21 as illustrated in FIG. 4, and the ship can navigates blowing air from the air blowing section 21B and generating a flow of bubbles B at the ship bottom.

As the ship navigates blowing the air from the air blowing section 21B and generating the flow of bubbles B at the ship bottom, friction of a hull can be reduced by the generated bubbles B. Preferably, the air blowing section 21B is provided on an upper side of the duct 21A of the duct propeller 21 at the additional propeller 20 according to the present invention, thereby reducing friction of the hull (particularly, at the ship bottom) and achieving economic operation.

The present invention is applicable to a standard cargo ship, a container ship, a tanker, an LNG carrier, a car carrier, a bulk carrier, a cargo-passenger ship, and so on.

## Claims

1. A ship configured to obtain propelling force by driving a main propeller with a main engine, and provided with an additional propeller and a driving unit for the additional propeller,
wherein one or a plurality of the additional propellers is disposed at a ship bottom or at a rising section of the ship bottom, in a position different from where the main propeller is disposed, and
operating condition is selectable between regular operating condition in which propelling force is obtained by driving the main propeller and the other operating condition in which propelling force is obtained by driving the additional propeller.

2. The ship according to claim 1, wherein the additional propeller is a duct propeller.

3. The ship according to claim 2, wherein an operational position of the duct propeller is selectable between a state of being assembled at the outside of the ship and the other state of being retracted to the inside of the ship.

4. The ship according to claim 2, wherein the duct propeller is provided at a stern area.

5. The ship according to claim 2, wherein the duct propeller is provided at a bow area.

6. The ship according to claim 2, wherein the duct propeller is provided at an intermediate area in the ship length direction.

7. The ship according to any one of claims 2 to 6, wherein the duct propeller is rotatable around a vertical shaft line.

8. A method for operating a ship configured to obtain propelling force by driving a main propeller with a main engine, and provided with an additional propeller and a driving unit for the additional propeller,
wherein the additional propeller is disposed at a ship bottom or at a rising section of the ship bottom, in a position different from where the main propeller is disposed, and
the ship is propelled by driving the main propeller in a load condition, and the ship is propelled by driving the additional propeller in an unload condition.

9. The method for operating a ship according to claim 8, wherein the additional propeller is a duct propeller, and the duct propeller is provided at a bow area, and the ship is propelled in a stern direction by driving the duct propeller in an unload condition.

10. The method for operating a ship according to claim 9, wherein the duct propeller is retractable to the inside of the ship, and the ship is propelled in the stern direction by driving the duct propeller after extracting the duct propeller from the inside to the outside of the ship so as to be assembled there in an unload condition.

11. The method for operating a ship according to claim 9 or 10, wherein the main propeller is partially or entirely disposed on a draft line when the duct propeller is driven in the unload condition.

12. The method for operating a ship according to claim 8, wherein an air blowing section is provided on an upper portion of a duct of the additional propeller to blow out air from the air blowing section, and the ship navigates generating a flow of bubbles at the ship bottom.
